# EUROPÄISCHE PATENTSCHRIFT

(11) **EP 1 286 773 B1**
(45) Veröffentlichungstag und Bekanntmachung des Hinweises auf die Patenterteilung: **13.12.2006**
(21) Anmeldenummer: 01936428.0
(22) Anmeldetag: 02.06.2001
(51) Int. Cl.: B01L 3/00

(54) **MIKROTITERPLATTE ODER CHIP MIT EINGEBETTETEM TRÄGERKERN**
MICRO-TITRE PLATE OR CHIP WITH AN EMBEDDED SUPPORT CORE
PLAQUE DE MICROTITRAGE OU PUCE DOTEE D'UNE AME DE SUPPORT ENCASTREE

(30) Priorität: 07.06.2000 DE 10028323
(43) Veröffentlichungstag der Anmeldung: 05.03.2003
(73) Patentinhaber: Evotec AG, 22525 Hamburg (DE)
(72) Erfinder: SOLLBÖHMER, Olaf, 21224 Rosengarten/Eckel (DE); KABAKCI, Ahmet, 80810 Istanbul-Bebek (TR)
(74) Vertreter: von Kirschbaum, Alexander
(86) Internationale Anmeldenummer: PCT/EP2001/006327
(87) Internationale Veröffentlichungsnummer: WO 2001/094018

(56) Entgegenhaltungen:
- EP-A- 0 844 025
- WO-A-99/19717
- DE-A- 19 712 484
- DE-A- 19 948 087
- PATENT ABSTRACTS OF JAPAN vol. 1995, no. 08, 29. September 1995 (1995-09-29) & JP 07 125739 A (KEIICHI KATO;OTHERS: 01), 16. Mai 1995 (1995-05-16)

## Beschreibung

Die Erfindung betrifft einen Probenträger zur Aufnahme von biologischen und/oder chemischen Proben mit einer mehrere Ausnehmungen aufweisenden flachen Trägerplatte gemäß dem unabhängigen Anspruch 1. Hierdurch sind einzelne Vertiefungen in der Trägerplatte gebildet, die zur Aufnahme von Proben dienen.

Bei dem Probenträger handelt es sich beispielsweise um eine Titerplatte. Diese weist üblicherweise eine Trägerplatte mit durchgehenden Ausnehmungen auf, die durch eine Bodenplatte, beispielsweise eine Glasplatte, verschlossen sind.

Bei Titerplatten sind die einzelnen Ausnehmungen in der Trägerplatte in regelmäßigen Abständen zueinander angeordnet, um in die einzelnen Ausnehmungen mit Hilfe eines automatisierten Prozesses Proben einzufüllen und diese Proben anschließend automatisch untersuchen zu können. Insbesondere handelt es sich bei den in den Ausnehmungen aufgenommenen Proben um Kleinstproben mit einem Volumen von weniger als 1 µl.

Beim automatischen Befüllen der Ausnehmungen sowie beim automatischen Untersuchen der Proben müssen insbesondere die Abstände der einzelnen Ausnehmungen zueinander exakt definiert sein, da die Titerplatte beispielsweise zu einer Pipette oder einem Messobjektiv, mit einer fest definierten Schrittweite bewegt werden muß. Bei entsprechend kleinen Ausnehmungen in der Titerplatte müssen die Toleranzen der Trägerplatte zu Realisierung eines automatischen Verfahrens kleiner als ± 100 µm sein. Insbesondere bei der optischen Analyse der Proben ist ferner eine hohe Planarität erforderlich. Die tolerierbaren Unebenheiten der Trägerplatte sind kleiner als 200 µm.

Die Trägerplatten herkömmlicher Titerplatten werden vielfach aus chemisch inertem Kunststoffmaterial, wie Polypropylen, hergestellt. Anschließend wird die Trägerplatte mit der Bodenplatte versehen, um die Durchgangsausnehmungen in der Trägerplatte zu verschließen. Bei der Bodenplatte handelt es sich beispielsweise um eine Glasplatte oder eine durchsichtige Kunststofffolie. Trägerplatten aus Kunststoff weisen den Nachteil auf, dass Kunststoff beim Abkühlen schrumpft. Dies hat zur Folge, dass die Maßhaltigkeit der Trägerplatte häufig außerhalb der Toleranzbereiche liegt. Da die Stärke der Schrumpfung insbesondere auch von Umgebungsbedingungen beim Herstellungsprozess, wie beispielsweise der Luftfeuchtigkeit abhängig ist, variiert die Stärke der Schrumpfung, so dass die Schrumpfung nicht über eine einfache Materialzugabe ausgeglichen werden kann.

Ferner kann es sich bei den Probenträgern um Chips handeln. Chips weisen als Ausnehmungen üblicherweise eine oder mehrere Kanäle, bei denen es sich beispielsweise um Kapillarkanäle und ggf. ein oder mehrere Flüssigkeitsreservoirs handeln kann, auf. Beispielsweise kann es sich um mikrofluidische Chips mit vorzugsweise zwei Reservoirs handeln, die über einen Kanal miteinander verbunden sind. Zwischen den beiden Reservoirs findet ein Fluidaustausch statt, der durch geeignete Ventile, Membranen, osmotische Barrieren und/oder Ionensperren geregelt werden kann. Mit derartigen Chips kann beispielsweise das Mischverhalten von Flüssigkeiten, z.B. unter Einfluss elektromagnetischer Kräfte untersucht werden. Bekannte Chips sind aus Silizium oder Glas hergestellt. Aufgrund des starken Schrumpfungsverhaltens von Kunststoff können Chips nicht mit ausreichender Genauigkeit aus Kunststoff hergestellt werden.

Chips können ferner mehrere Eingangskanäle sowie eine Kanalanordnung zur Aufnahme und/oder Führung von Fluiden, Suspensionen oder Lösungen, einen oder mehrere Ausgangskanäle und mehrere Reservoirs aufweisen. In den Reservoirs kann Behandlungslösung zum Waschen, Kultivieren, Konservieren, Cryokonservieren etc. vorgesehen sein. Ferner können Chips Pumpvorrichtungen, wie Peristaltikpumpen, Spritzpumpen oder elektroosmotisch wirkende Fluid- und Partikelantriebe, aufweisen. Zusätzlich können Sensoren zur Bestimmung von Probeneigenschaften, wie beispielsweise der Temperatur, dem pH-Wert oder der Leitfähigkeit, vorgesehen sein.

Bekannt sind ferner Chips aus Silikonmaterial, insbesondere Silikonkautschuk, die bei Raumtemperatur gegossen werden, aushärten und nach dem Aushärten aus der Form gelöst werden. Diese Silikon-Chips können unmittelbar nach dem Lösen aus der Form verwendet werden. Verfahrensbedingt treten hierbei keine oder nur sehr geringe Schrumpfungen auf. Silikon-Chips können jedoch nur in relativ großen Strukturgrößen hergestellt werden. Es ist nicht möglich, bei Silikon-Chips Kanalabmessungen von weniger als 10 nm herzustellen. Ferner weisen Silikon-Chips den Nachteil auf, dass größere Hohlräume sich auf Grund des Eigengewichts der Wandungen verformen.

Aus der Offenlegungsschrift DE19712484 ist eine Mikrotiterplatte aus einem Rahmenteil und einem Bodenteil bekannt, wobei das Rahmenteil beispielsweise durch den Einschluß von Metallspänen, wie Nickel- oder Edelstahlspänen oder von Ruß eine höhere Wärmeleitfähigkeit gewährleistet. Es ist auch vorgesehen, die Mikrotiterplatte in einem einstufigen Verfahren herzustellen, wobei das als Folie oder Membran ausgeführte Bodenteil in einer Spritzgießvorrichtung angeordnet und anschließend eine erhitzte und plastifizierte Formmasse zur Herstellung des Rahmenteils in die Spritzgieß-Vorrichtung eingespritzt und auf dem Bodenteil angebracht wird, wobei die einzuspritzende Formmasse die Folie nicht unterspritzen kann und größeren Staubpartikeln der Zutritt in den Spritzraum verwehrt wird. Dabei kann eine Folie mit erhöhter Wärmeleitfähigkeit, zum Beispiel aus Aluminium, vorgesehen sein. Auch kann die Folie mehrschichtig aufgebaut sein, wobei beispielsweise die dem Rahmenteil zugewandte Schicht der Folie einer besonders guten Verbindung zum Rahmenteil dient, während die dem Rahmenteil abgewandte Schicht der Folie einer Stabilitätsverbesserung dient.

Aus der japanischen Patentanmeldung mit der Veröffentlichungsnummer 07125739 ist ein Probenbehälter mit einem die Wärmeleitfähigkeit erhöhenden Füllmaterial bekannt.

Aufgabe der Erfindung ist es die Maßhaltigkeit eines Probenträgers und insbesondere die Planarität von Titerplatten zu verbessern.

Die Lösung der Aufgabe erfolgt erfindungsgemäß durch einen Probenträger mit den Merkmalen des Anspruchs 1 bzw. durch ein Verfahren zur Herstellung des Probenträgers mit den Merkmalen des Anspruchs 13.

Erfindungsgemäß ist in die Trägerplatte des Probenträgers ein die Ausnehmungen der Trägerplatte umgebener Trägerkern eingebettet. Der Trägerkern besteht aus höherschmelzendem Material als der Kunststoff der Trägerplatte. Bei der Herstellung der Trägerplatte, die beispielsweise durch Umspritzen des Trägerkerns mit einer Kunststoffschicht, vorzugsweise Polypropylen oder Silikon, erfolgt, wird der Trägerkern von der Kunststoffschicht umgeben. Hierbei ist der Trägerkern zumindest im Bereich der Ausnehmungen der Trägerplatte vollständig von Kunststoff umgeben. Aufgrund des Vorsehens eines Trägerkerns, der bei der Herstellung nicht aufschmilzt, ist die Kunststoffschicht erheblich dünner als bei herkömmlichen Trägerplatten. Dies führt dazu, dass eine geringere Schrumpfung stattfindet. Der erfindungsgemäße Probenträger weist somit eine erheblich genauere Maßhaltigkeit auf, so dass es möglich ist, auch geringe Toleranzen einzuhalten.

Das Vorsehen eines Trägers aus höherschmelzendem Material hat ferner den Vorteil, dass die Stabilität des Probenträgers erhöht wird. Der Probenträger kann somit bei automatischen Untersuchungsverfahren nicht so leicht verbogen werden, wie beispielsweise bekannte Titerplatten. Dies hat den Vorteil, dass die Positionen der einzelnen Ausnehmungen des Probenträgers nicht durch die Einwirkung von äußeren Kräften beeinträchtigt werden.

Durch das erfindungsgemäße Vorsehen eines Trägerkerns in einem Chip ist es möglich, Chips aus Kunststoff herzustellen, da eine ausreichende Maßhaltigkeit erzielt werden kann. Dies hat den Vorteil, dass als Kunststoff Polypropylen, das aufgrund seiner chemischen Inertheit bevorzugt ist, verwendet werden kann. Durch den erfindungsgemäßen Aufbau eines Kunststoffchips mit höherschmelzendem Kern ist ein unzerbrechlicher Chip geschaffen. Dies hat bei der Handhabung, insbesondere in automatisierten Prozessen, erhebliche Vorteile. Auch wenn der Kern aus zerbrechlichem Material besteht, ist dieses durch die Kunststoffummantelung ausreichend geschützt.

Durch das erfindungsgemäße Vorsehen eines Trägerkerns aus einem höherschmelzenden Material ist es ferner möglich, auch Silikon-Chips herzustellen, da durch den Trägerkern die Stabilität des Silikons, insbesondere des Silikonkautschuks, erhöht wird, so dass sich die Chipstruktur nicht mehr auf Grund ihres Eigengewichts verformt. Auch ist durch den Trägerkern vermieden, dass der erfindungsgemäße Chip sich während der manuellen oder automatischen Handhabung verformt.

Bei herkömmlichen Titerplatten treten bei Temperaturschwankungen starke Spannungen auf, da die thermischen Ausdehnungskoeffizienten z.B. des Kunststoffs der Trägerplatte und des Glases der Bodenplatte sich unterscheiden. Dies führt zu Verformungen der Titerplatte. Erfindungsgemäß kann der Wärmeausdehnungskoeffizient des Trägerkerns so gewählt werden, dass er dem Wärmeausdehnungskoeffizienten der Bodenplatte entspricht, bzw. diesem ähnlich ist. Hierdurch werden die, aufgrund von Temperaturschwankungen in der Titerplatte entstehenden Spannungen erheblich reduziert. Dies gilt beispielsweise auch für auftretende thermische Spannungen, die beim Befestigen einer als Bodenplatte dienenden Folie auftreten, wenn diese auf die Trägerplatte aufgeschweißt wird.

Jede Ausnehmung der Trägerplatte ist von dem Trägerkern umgeben. Hierdurch wird die Schrumpfung der Trägerplatte beim Abkühlen weiter verringert.

Als Trägerkern kann beispielsweise ein Geflecht oder Netz aus hartem Kunststoff oder Metall vorgesehen werden. Der Trägerkern kann Glas, Halbleiter, insbesondere Silizium, dotiertes Silizium, Keramik oder dotierte Keramik aufweisen. Derartige Kerne sind insbesondere bei Chips vorteilhaft. Vorzugsweise handelt es sich bei dem Trägerkern um eine Metallplatte. Die Metallplatte weist Öffnungen auf, die zu denen in der Trägerplatte vorgesehenen Ausnehmungen korrespondieren. Dies ist beispielsweise bei Titerplatten erforderlich, da sich die Ausnehmungen durch die gesamte Trägerplatte erstrecken und somit nicht durch den Trägerkern unterbrochen werden. Bei Chips kann der Trägerkern auch so ausgebildet sein, dass er sowohl seitlich neben als auch unter der Ausnehmung vorgesehen ist.

Die Öffnungen des Trägerkerns sind vorzugsweise in ihren Abmessungen geringfügig größer als die Ausnehmungen der Trägerplatte. Hierdurch kann eine sehr dünne Wandstärke der Ausnehmungen erzielt werden, so dass der Kunststoff der Trägerplatte insbesondere in diesem Bereich keiner oder nur äußerst geringer Schrumpfung unterworfen ist. Die Wandstärke der Ausnehmungen beträgt vorzugsweise 0,1 - 0,7 mm. Besonders bevorzugt ist eine Wandstärke von 0,2 - 0,5 mm.

Bei einer besonders bevorzugten Ausführungsform wird ein thermisch leitfähiger Kern, wie beispielsweise eine Metallplatte in die Trägerplatte eingebettet. Bei dieser Ausführungsform hat der Trägerkern freiliegende Kontaktflächen, d. h. Bereiche, die nicht mit dem Kunststoff der Trägerplatte umgeben sind. Über diese Kontaktflächen kann Wärme in die Titerplatte eingeleitet und/oder abgeleitet werden. Hierdurch ist eine einfache und gezielte Erwärmung oder Kühlung des Probenträgers möglich. Insbesondere ist es möglich, dem Probenträger einen Temperaturgradienten aufzuprägen, so dass ein Probenträger in einem vorgegebenen zeitlichen Verlauf erwärmt oder gekühlt werden kann. Es ist möglich, beispielsweise über die Länge des Probenträgers diesem eine sich z.B. in Längsrichtung ändernde Temperatur aufzuprägen. Die Erwärmung des Probenträgers kann beispielsweise durch Einkoppeln von Wirbelströmen oder durch Kontakt von Wärmeelementen mit den Kontaktflächen erfolgen. Sowohl zum Erwärmen als auch zum Kühlen ist es bei der erfindungsgemäßen Titerplatte nicht erforderlich, die Titerplatte in einem geschlossenen Gehäuse anzuordnen und den gesamten Innenraum dieses Gehäuses zu erwärmen bzw. zu kühlen.

Das Vorsehen eines metallischen Trägerkerns hat ferner den Vorteil, dass dieser magnetisch sein kann, bzw. magnetisierbar ist. Es ist somit beispielsweise über die Kontaktflächen möglich, den Probenträger mittels eines magnetischen Greifers in einem automatischen Untersuchungsverfahren zu bewegen. Ebenso kann ein Probenträger mit Hilfe magnetischer Fördersysteme auf einfache Weise bewegt werden. Dies hat den Vorteil, dass die Sterilität des Probenträgers verbessert ist, da zum Transport kein Kontakt mit den Probenträgern erforderlich ist. Ebenso ist es bei derartigen Probenträgern möglich ein magnetisches Deckelsystem vorzusehen.

Durch das erfindungsgemäß Vorsehen des Trägerkerns können Probenträger mit hochwertiger planarer Oberfläche realisiert werden. Es ist daher möglich, zum Transport der Probenträger Saugnäpfe zu verwendet. Hierbei erfolgt der Transport über an die Saugnäpfe angelegten Unterdruck.

Zum Transport des Probenträgers kann dieser auch im Querschnitt prismenartige Ansätze aufweisen, die vorzugsweise im Randbereich des Probenträgers vorgesehen sind. Durch das Vorsehen prismenartiger Ansätze erfolgt ein automatisches Zentrieren des Probenträgers in einem entsprechend ausgebildeten Greifer. Ebenso kann der Probenträger kugelförmige Ausnehmungen aufweisen, in die an dem Greifer vorgesehene Kugeln eingreifen. Dies führt ebenfalls zu einer automatischen Zentrierung.

Wenn es sich bei dem Probenträger um eine Titerplatte handelt, kann diese auch einstückig ausgebildet sein. Es ist hierbei beispielsweise in einem einzigen Spritzvorgang möglich, den Trägerkern mit Kunststoff zu umspritzen und hierbei gleichzeitig die Trägerplatte sowie die Bodenplatte herzustellen.

Um auch bei dicken Probenträgern das Schrumpfen der Probenträger zu vermeiden, sind bei dicken Probenträgern vorzugsweise mehrere im Wesentlichen parallel zueinander angeordnete Platten als Trägerkern vorgesehen. Hierbei handelt es sich vorzugsweise wiederum um Metallplatten. Diese können insbesondere in Form einer Sandwichstruktur in dem Probenträger angeordnet sein, so dass zwischen den einzelnen Platten des Trägerkerns der Kunststoff des Probenträgers oder ein anderes Material vorgesehen ist. Hierbei ist es auch möglich zwischen den einzelnen Platten Material mit geeigneten thermischen Ausdehnungskoeffizienten vorzusehen, um Spannungen in dem Probenträger zu vermeiden.

Zur Herstellung des vorstehend beschriebenen Probenträgers wird der Trägerkern mit Kunststoff beispielsweise Polypropylen umspritzt, so dass eine Trägerplatte mit eingebettetem Trägerkern entsteht. Der Trägerkern ist hierbei im Bereich der Ausnehmungen der Trägerplatte vollständig von Kunststoff umgeben. In angrenzenden Bereichen ist je nach Ausführungsform eine Umgebung von Kunststoff nicht erforderlich bzw. beim Vorsehen von Kontaktflächen auch nicht erwünscht. Handelt es sich bei dem Probenträger um eine Titerplatte, wird anschließend an der Trägerplatte die Bodenplatte befestigt.

Wenn es sich bei der Bodenplatte um eine Glasplatte handelt, wird diese vorzugsweise aufgeklebt. Werden als Bodenplatte Kunststofffolien verwendet, erfolgt die Befestigung vorzugsweise durch Aufschweißen.

Vorzugsweise erfolgt die Herstellung im Spritzgussverfahren, wobei der Trägerkern vor dem Umspritzen in eine Spritzgussform eingelegt wird.

Handelt es sich bei dem Trägerkern um eine Metallplatte wird diese vorzugsweise durch Stanzen hergestellt.

Nachfolgend wird die Erfindung anhand bevorzugter Ausführungsformen unter Bezugnahme auf die anliegenden Zeichnungen näher erläutert.

Es zeigen:
- Fig. 1: eine schematisch perspektivische Ansicht einer bevorzugten Ausführungsform des Probenträgers von unten ohne Bodenplatte,
- Fig. 2: eine Schnittansicht entlang der Linie II-II in Fig. 1 mit Bodenplatte,
- Fig. 3: eine schematische perspektivische Ansicht eines Chips und
- Fign. 4 bis 7: beispielhaft unterschiedliche Chipstrukturen.

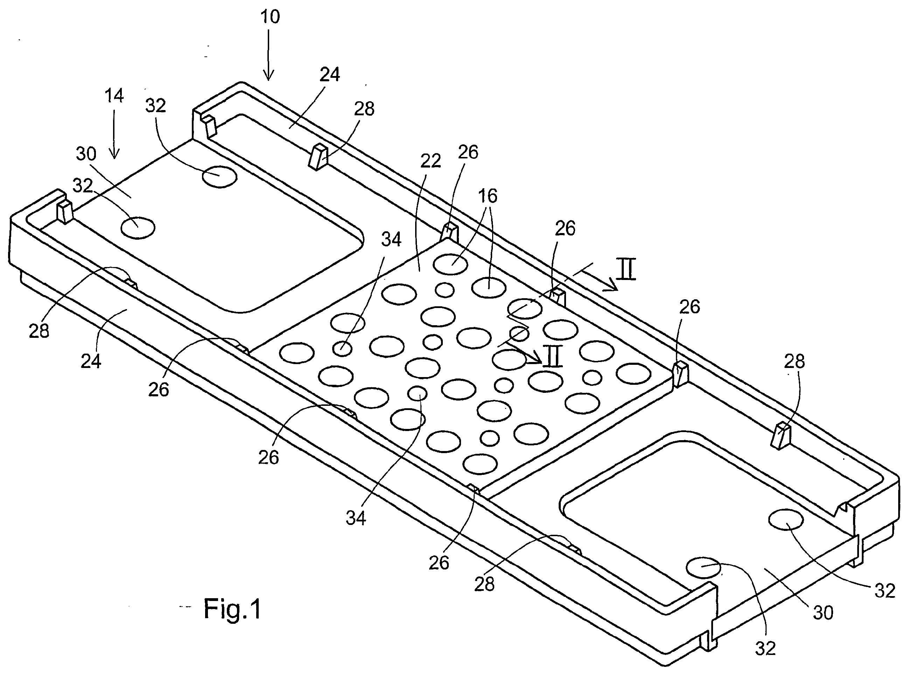

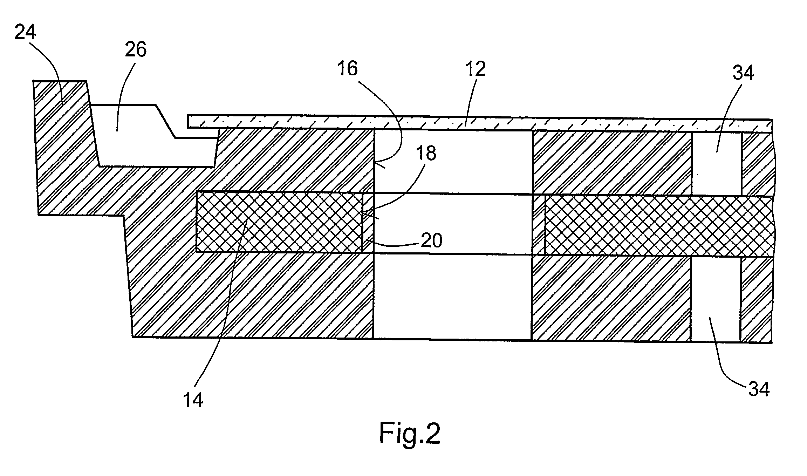

Die in Fig. 1 dargestellte Trägerplatte 10 ist ohne Bodenplatte 12 (Fig. 2), bei der es sich beispielsweise um eine Glasplatte handelt, dargestellt. Die Trägerplatte 10 weist einen in diese eingebetteten Trägerkern 14, in Form einer Metallplatte auf. Die Metallplatte 14 weist dieselbe Länge wie die Trägerplatte 10 auf. Im mittleren Bereich der Trägerplatte 10 sind Ausnehmungen 16 zur Aufnahme von Proben vorgesehen. Die Ausnehmungen 16 erstrecken sich über die gesamte Höhe der Trägerplatte 10. Es handelt sich somit um Durchgangsausnehmungen. Dementsprechend weist die Metallplatte 14 zu den Ausnehmungen 16 korrespondierende Öffnungen 18 (Fig. 2) auf. Der Durchmesser der kreisrunden Öffnungen 18 ist geringfügig größer als der Durchmesser der Ausnehmungen 16. Hierdurch weisen die Ausnehmungen 16 im Bereich der Metallplatte 14 eine dünne Wandung 20 auf. Die Ausnehmungen 16 sowie die korrespondierenden Öffnungen 18 können auch eine andere, beispielsweise achteckige, Form haben. Ebenso können die Ausnehmungen 16 und die Öffnungen 18 konisch ausgebildet sein. Die Wandstärke der Wandung 20 ist hierbei möglichst stets gleich dick.

Die Ausnehmungen 16 sind regelmäßig angeordnet. Im dargestellten Ausführungsbeispiel handelt es sich um vier Zeilen mit jeweils sechs Ausnehmungen 16, so dass das dargestellte Ausführungsbeispiel der Titerplatte vierundzwanzig Ausnehmungen aufweist. Andere übliche Formate weisen beispielsweise 96, 384, 1536, 2080 oder 3456 Ausnehmungen auf. Sämtliche Ausnehmungen 16 weisen denselben Durchmesser auf.

Zum Verschließen der Ausnehmungen 16 ist auf die Oberfläche 22 die Glasplatte 12 angebracht. Das Befestigen der Glasplatte 12 auf der Oberfläche 22 erfolgt beispielsweise durch Aufkleben. Zur genauen Lagebestimmung der Glasplatte 12 sind an den Rahmenteilen 24, die an den Längskanten der Trägerplatte 10 vorgesehen sind, Ansätze 26 vorgesehen. Hierdurch ist ein Verrutschen der Glasplatte 12 beim Aufkleben vermieden, so dass die Glasplatte im Bereich der Ausnehmungen 16 nicht durch Klebstoff verunreinigt werden kann.

Die Höhe der Rahmenteile 24 ist so gewählt, dass die Rahmenteile 24 auch bei eingeklebter Glasplatte über diese vorstehen. Hierdurch ist es möglich mehrere Titerplatten aufeinander zu stapeln, ohne dass eine Glasplatte 12 eine darunter liegende Titerplatte berührt und hierbei beschädigt werden könnte. Zur seitlichen Fixierung gestapelter Titerplatten weist die mit den Rahmenteilen 24 gegenüberliegende Seite, d. h. die Oberseite der Titerplatten eine geringere Breite auf, so dass beim Aufeinanderstapeln die einzelnen Titerplatten ineinander rutschen. Um ein Berühren der Glasplatte 12 zu vermeiden, sind zusätzlich zu den Ansätzen 26, zwischen denen die Glasplatte 12 liegt, Ansätze 28 vorgesehen. Bei aufeinander gestapelten Titerplatten liegt die benachbarte Titerplatte jeweils auf den Oberseiten der Ansätze 26 und 28 auf.

Der sich über die gesamte Länge der Trägerplatte 10 erstreckende Trägerkern 14 ist nicht vollständig mit Kunststoff umspritzt, sondern weist an beiden Endbereichen jeweils eine Kontaktfläche 30 auf. Über die Kontaktfläche 30 kann in die Metallplatte 14 Wärme zur Erwärmung der in den Ausnehmungen 16 befindlichen Proben eingeleitet werden. Zur Lagefixierung der Titerplatte in einer Vorrichtung sind in den Kontaktflächen 30 zusätzlich Ausrichtbohrungen 32 vorgesehen.

Ferner weist die Trägerplatte 10 im Bereich der Ausnehmungen 16 Homogenisierungsausnehmungen 34 auf. Die Homogenisierungsausnehmungen 34 sind zwischen den Ausnehmungen 16 derart angeordnet, dass jede Ausnehmung 16 zu mindestens einer Homogenisierungsausnehmung 34 benachbart ist. Die Homogenisierungsausnehmungen 34 erstrecken sich nicht durch die gesamte Trägerplatte. Dies bedeutet, dass die Metallplatte keine korrespondierenden Öffnungen aufweist (Fig. 2). Den in Fig. 1 dargestellten Homogenisierungsausnehmungen 34 ist jeweils eine weitere Homogenisierungsausnehmung 34 gegenüberliegend zugeordnet. Die Homogenisierungsausnehmungen 34 dienen insbesondere bei der Erwärmung der Titerplatte zum Ausgleich von Ausdehnungen des Kunststoffs der Trägerplatte. Ferner kann an diesen Stellen die Trägerplatte mittels Auswerfer aus dem Spritzgusswerkzeug ausgeworfen werden, wobei das Auswerfen auch durch Zurückziehen der Auswerfer erfolgen kann. Ferner dienen die Auswerfer zur Stabilisierung des Kerns in der Spritzgussform.

Zusätzlich weist die Metallplatte 14 seitlich neben dem Bereich, an dem die Ausnehmungen 16 bzw. die korrespondierenden Öffnungen 18 vorgesehen sind Öffnungen auf, die beim Umspritzen der Metallplatte 10 vollständig mit Kunststoff gefüllt werden. Diese Öffnungen dienen zur formschlüssigen Fixierung der Kunststoffhülle an der Metallplatte 14.

Ferner kann die Metallplatte 14 Haltebohrungen aufweisen. Hierbei handelt es sich um Sackbohrungen oder Durchgangsbohrungen. Da beim Umspritzen der Metallplatte 14 Kunststoff in die Haltebohrungen eindringt, entsteht eine formschlüssige Verbindung zwischen der Metallplatte und dem Kunststoff. Eine formschlüssige Verbindung kann auch durch das Vorsehen von Prägungen oder anderen Vertiefungen in der Metallplatte 14 erfolgen. Ebenso kann die Metallplatte Ansätze aufweisen, die sodann von Kunststoff umspritzt sind. Diese bilden ebenfalls eine formschlüssige Verbindung zwischen der Metallplatte und dem Kunststoff. Zusätzlich oder anstelle der Haltebohrungen kann die Oberfläche der Metallplatte 14 aufgerauht werden. Hierdurch entsteht eine bessere Verbindung zwischen dem Kunststoff und der Metallplatte 14.

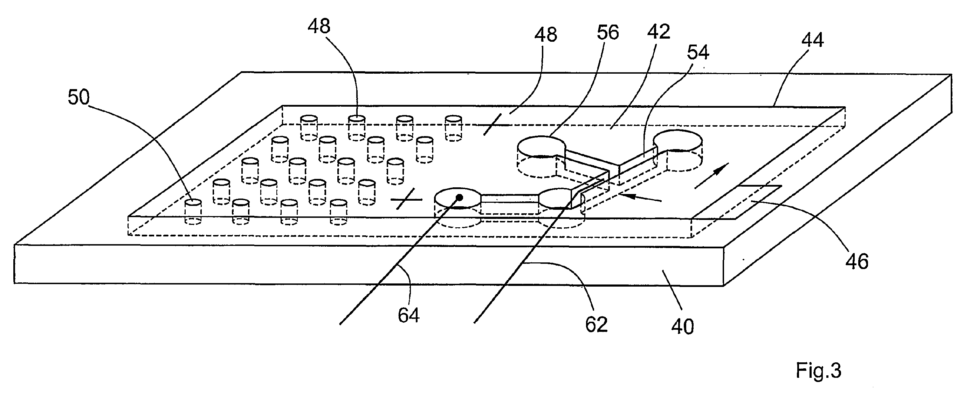

Fig. 3 illustriert in schematischer Perspektivansicht eine Chipstruktur. Auf dem Probenträger sind verschiedene Kompartimentstrukturen und Zusatzeinrichtungen gezeigt, die anwendungsabhängig einzeln oder simultan vorgesehen sein können. Die Chipstruktur umfasst das Bodenteil bzw. den Rahmen 40 und den Probenträger 42.

Das Bodenteil 40 ist beispielsweise eine ebene Glasplatte mit einer Dicke entsprechend der Stärke von Deckgläsern zum Einsatz in der Mikroskopie (rund 150 µm). Das Bodenteil 40 kann auch durch einen beliebigen anderen Körper mit einer im Wesentlichen glatten, ebenen oder gekrümmten Oberfläche gebildet werden. Vorzugsweise besitzt das Bodenteil eine im Wesentlichen glatte, ebene Oberfläche.

Der Probenträger 42 umfasst beispielsweise eine Kompartimentschicht 44 mit Kompartimentstrukturen. Die Kompartimentschicht 44 besteht vorzugsweise aus Silikonkautschuk. An einer oder mehreren Seiten der Kompartimentschicht können eine Lasche 46 zum Abziehen des Probenträgers 42 vom Bodenteil 40 und/oder Justiermarkierungen 47 zum Positionieren des Probenträgers 42 relativ zu einer Mess- oder Probenbeschickungseinrichtung vorgesehen sein. Die Justiermarkierungen 47 sind beispielsweise punkt- oder kreuzförmige Ausnehmungen in der Oberfläche des Probenträgers 42, die ggf. mit einer zusätzlichen Markierungssubstanz (z.B. Fluoreszenzfarbstoff) versehen sind. Die Justiermarkierungen besitzen charakteristische Dimensionen, die erheblich geringer als die Dimensionen der Kompartimentstrukturen sein können.

Der Probenträger 42 weist entsprechend der anhand der Fign. 1-2 beschriebenen Titerplatte erfindungsgemäß einen Kern aus höherschmelzendem Material auf.

Die Kompartimentstrukturen umfassen im Einzelnen geschlossene Probenreservoire 48 in Form durchgehender Löcher 50 oder in der Oberfläche des Probenträgers abgesenkter Vertiefungen (Durchmesser z.B. rund 200 µm bis 1,5 mm) oder in der Schichtebene des Probenträgers verlaufende gerade, gekrümmte oder sich verzweigende Kanäle 54. Das Bezugszeichen 56 verweist auf so genannte Vorratstöpfe, die wie die Probenreservoire 48 zur Probenaufnahme und -abgabe, allerdings mit größeren Volumina, ausgelegt sind.

Die Manipulations- und Untersuchungseinrichtungen umfassen beispielsweise eine Fluidleitung in Form mindestens einer Kapillare 54, mindestens einer Elektrode 62 und/oder mindestens eines Sensors 64, die in der Schichtebene des Probenträgers 42, an den Wänden der Kompartimentstrukturen oder in den Kompartimentstrukturen angeordnet sind. Die Kapillare 54 kann beispielsweise mit einem Proben- oder Reagenzienzufuhrsystem (nicht dargestellt) verbunden sein. Sie wird während der Herstellung des Probenträgers 42 (s.u.) in diesen eingebettet oder nachträglich in den Probenträger 42 eingestochen. Die Elektroden sind so aufgebaut, wie es an sich aus der Mikrosystemtechnik von Mikroelektroden für elektroosmotische Pumpvorgänge, Manipulationen an Partikeln unter Ausnutzung negativer Dielektrophorese oder Partibelbearbeitungen, wie z.B. Elektroporation an biologischen Zellen, bekannt ist. Die Elektroden bzw. ihre Zuleitungen werden vorzugsweise während der Herstellung des Probenträgers 42 in diesen eingebettet bzw. auf dessen inneren Oberflächen (Wände der Kompartimente) angeordnet.

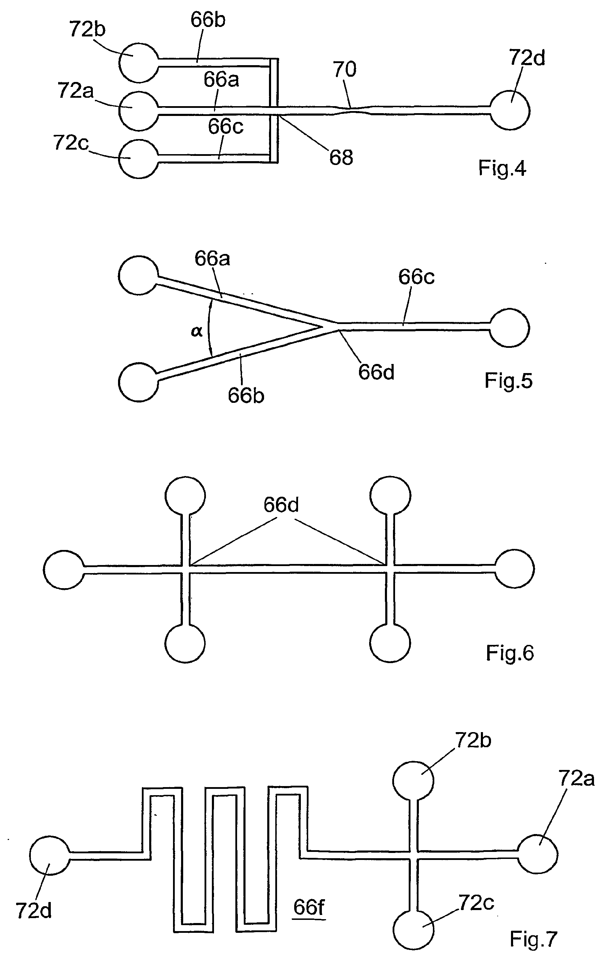

Fig. 4 zeigt eine Kanalstruktur mit mehreren Kanälen 66a-66c, die an einem Mischungskreuz 68 verbunden sind. An den Kanalenden befinden sich jeweils Vorratstöpfe 72a-72d. Das Bezugszeichen 70 weist auf eine Verengungsstelle. Die Verengungsstelle 70 kann strömungsmechanisch durch Barrieren (ausgewölbte Kanalwand) oder auch elektrisch durch elektrische Feldbarrieren gebildet werden, beispielsweise um die Fluidströmung vor diesem Bereich zu verzögern und dort Messungen an suspendierten Partikeln in der Fluidströmung durchzuführen.

Eine Abwandlung ist in Fig. 5 gezeigt. Zwei Teilkanäle 66a,66b verbinden sich in einem gemeinsamen Kanal 66c. Diese Struktur dient dem Vermischen von zwei Fluidströmen in einen einzigen Fluidstrom. Der Winkel α zwischen den Teilkanälen 66a,66b ist anwendungsabhängig zur Erzielung eines gleichförmigen Strömens an dem Mischungspunkt 66d eingestellt.

Eine weitere Abwandlung von Strukturen zum Vermischen der Fluidströmungen ist in Fig. 6 als Doppelkreuzanordnung mit mehreren Teilkanälen illustriert, die in zwei Mischungspunkte 66d münden. Die Mäanderform 66f gemäß Fig. 7 dient der Schaffung einer besonders langen Messstrecke. Zwischen den Vorratstöpfen 72a-72d einerseits und dem Vorratstopf 72d erstreckt sich ein langer, gewundener Kanal in einem Flächenbereich, der beispielsweise ein Target zur Beleuchtung für Fluoreszenzmessungen bildet.

Die als Beispiel der dargestellten Chipstrukturen sowie der in Fig. 3 dargestellte Chip weisen entsprechend der nach den Fign. 1 und 2 beschriebenen Titerplatte erfindungsgemäß ebenfalls einen Kern aus höherschmelzendem Material auf. Dieser hat wie bei den Titerplatten den Effekt, dass das Auftreten von Schrumpfungen verringert ist. In Fig. 3 weist somit der Probenträger 42 einen nicht dargestellten Kern aus höherschmelzendem Material, zum Beispiel aus Metall, auf. Der Metallkern ist in diesem Fall vollständig von Kunststoff umspritzt.

## Patentansprüche

1. Probenträger zur Aufnahme von biologischen und/oder chemischen Proben, mit einer mehrere Ausnehmungen (16,54) aufweisenden flachen Trägerplatte (10,42) aus Kunststoff in welche ein die Ausnehmungen (16) umgebender Trägerkern (14) aus höherschmelzendem Material eingebettet ist,
**dadurch gekennzeichnet, dass** der Trägerkern (14) zumindest im Bereich der Ausnehmungen (15, 16) der Trägerplatte vollständig von Kunststoff umgeben ist.

2. Probenträger nach Anspruch 1, **dadurch gekennzeichnet, dass** der Trägerkern (14) eine Metallplatte mit zu den Ausnehmungen (16,54) korrespondierenden Öffnungen (18) ist.

3. Probenträger nach Anspruch 2, **dadurch gekennzeichnet, dass** die Öffnungen (18) des Trägerkerns (14) geringfügig größere Abmessungen als die Ausnehmungen (16, 54) der Trägerplatte (10,42) aufweisen, so dass die Wandstärke der Ausnehmungen 0,1-0,7 mm, vorzugsweise 0,2-0,5 mm, beträgt.

4. Probenträger nach einem der Ansprüche 1-3, **dadurch gekennzeichnet, dass** der Trägerkern (14) mindestens eine freiliegende Kontaktfläche (30) aufweist.

5. Probenträger nach einem der Ansprüche 1-4, **dadurch gekennzeichnet, dass** der Probenträger als Titerplatte ausgebildet ist, wobei die Ausnehmungen (16) in der Trägerplatte (10) durchgehend sind und eine die Ausnehmungen (16) verschließende Bodenplatte (12) vorgesehen ist.

6. Probenträger nach Anspruch 5, **dadurch gekennzeichnet, dass** die Trägerplatte (10) und die Bodenplatte (12) einstückig ist.

7. Probenträger nach Anspruch 5 oder 6, **dadurch gekennzeichnet, dass** die Trägerplatte (10) auf der Seite der Bodenplatte (12) Ansätze (26, 28) Abstandshalter aufweist, auf deren Oberseiten beim Aufeinanderstapeln der Titerplatte die benachbarte Titerplatte aufliegt.

8. Probenträger nach einem der Ansprüche 1-3, **dadurch gekennzeichnet, dass** der Probenträger als Chip (42) ausgebildet ist, wobei die Ausnehmungen (54) vorzugsweise als Kanäle (66a-66c) ausgebildet sind.

9. Probenträger nach einem der Ansprüche 1-8, **dadurch gekennzeichnet, dass** die Trägerplatte (10,42) zwischen den Ausnehmungen (16,54) Homogenisierungsausnehmungen (34) aufweist.

10. Probenträger nach einem der Ansprüche 1-9, **dadurch gekennzeichnet, dass** der Trägerkern (14) mehrere parallel zueinander angeordnete Platten, insbesondere Metallplatten aufweist.

11. Probenträger nach Anspruch 10, **dadurch gekennzeichnet, dass** die Platten als Sandwichstruktur in der Trägerplatte (10, 42) angeordnet sind.

12. Verfahren zur Herstellung eines Probenträgers mit eingebettetem Trägerkern (14) nach einem der Ansprüche 1-11, **dadurch gekennzeichnet, dass** zur Herstellung der Trägerplatte (10,42) der Trägerkern (14) mit Kunststoff umspritzt wird, so daß der Trägerkern zumindest im Bereich des Ausnehmungen vollständig von Kunststoff umgeben ist.

13. Verfahren nach Anspruch 12, bei welchem der Trägerkern (14) vor dem Umspritzen in eine Spritzgußform eingelegt wird.

14. Verfahren nach Anspruch 12 oder 13, bei welchem zur Herstellung einer Titerplatte die Bodenplatte insbesondere durch Aufkleben oder Aufschweißen an der Trägerplatte (10) befestigt wird.

15. Verfahren nach einem der Ansprüche 12 - 14, bei welchem die Öffnungen (18) in dem Trägerkern (14) durch Stanzen hergestellt werden.

## Claims

1. A sample support for receiving biological and/or chemical samples, comprising:
- a flat support plate (10, 42) of plastic material comprising a plurality of recesses (16, 54), a support core (14) of a higher-melting material being embedded in the support plate (10, 42) surrounding the recesses (16),
**characterized in that**
the support core (14) is entirely surrounded by plastic material at least in the region of the recesses (16, 54) in the support plate.

2. The sample support of claim 1, **characterized in that** the support core (14) is a metal plate with openings (18) corresponding to the recesses (16, 54).

3. The sample support of claim 2, **characterized in that** the dimensions of the openings (18) of the support core (14) are slightly larger than those of the recesses (16, 54) of the support plate (10, 42) so that the wall thickness of the recesses is 0.1 - 0.7 mm, preferably 0.2 -0.5 mm.

4. The sample support of one of claims 1-3, **characterized in that** the support core (14) has at least one exposed contact surface (30).

5. The sample support of one of claims 1 -4, **characterized in that** the sample support is designed as a titre plate, the recesses (16) in the support plate (10) being continuous, and a bottom plate (12) closing the recesses (16) is provided.

6. The sample support of claim 5, **characterized in that** the support plate (10) and the bottom plate (12) are integral.

7. The sample support of claim 5 or 6, **characterized in that** the support plate (10) comprises tabs (26, 28) acting as spacers at the side of the bottom plate (12), on whose top surfaces an adjacent titre plate rests when the titre plates are stacked.

8. The sample support of one of claims 1-3, **characterized in that** the sample support is designed as a chip (42), the recesses (54) being preferably designed as channels (66a-66c).

9. The sample support of one of claims 1-8, **characterized in that** the support plate (10,42) comprises homogenizing recesses (34) between the recesses (16, 54).

10. The sample support of one of claims 1 - 9, **characterized in that** the support core (14) comprises a plurality of parallel plates, in particular metal plates.

11. The sample support of claim 10, **characterized in that** the plates are arranged as a sandwich structure in the support plate (10, 42).

12. A method for manufacturing a sample support of one of claims 1 - 11, comprising the step of extrusion coating the support core (14) with plastic material to produce the support plate (10, 42) such that the support core is fully enclosed by plastic material at least in the region of the recesses.

13. The method of claim 12, wherein the support core (14) is placed into an injection molding mold prior to extrusion-coating.

14. The method of claim 12 or 13, wherein, for making a titre plate, the bottom plate is fixed to the support plate (10) in particular by glueing or welding.

15. The method of one of claims 12 - 14, wherein the openings (18) in the support core (14) are made by punching.

## Revendications

1. Porte-échantillons pour recevoir des échantillons biologiques et/ou chimiques, comprenant une plaque support (10, 42) plate, en matière synthétique, présentant une pluralité d'évidements (16, 54), dans laquelle est encastrée une âme de support (14) constituée d'un matériau à point de fusion élevé, entourant les évidements (16),
**caractérisé en ce que** l'âme de support (14) est complètement entourée de matière synthétique, au moins dans la zone des évidements (15, 16) de la plaque support.

2. Porte-échantillons selon la revendication 1, **caractérisé en ce que** l'âme de support (14) est une plaque métallique comportant des ouvertures (18) correspondant aux évidements (16, 54).

3. Porte-échantillons selon la revendication 2, **caractérisé en ce que** les ouvertures (18) de l'âme de support (14) présentent des dimensions légèrement supérieures à celles des évidements (16, 54) de la plaque support (10, 42), de manière que l'épaisseur de paroi des évidements soit de 0,1 à 0,7 mm, de préférence de 0,2 à 0,5 mm.

4. Porte-échantillons selon l'une des revendications 1 à 3, **caractérisé en ce que** l'âme de support (14) présente au moins une face de contact (30) nue.

5. Porte-échantillons selon l'une des revendications 1 à 4, **caractérisé en ce que** le porte-échantillons est réalisé en tant que plaque de titrage, dans laquelle les évidements (16) traversent de part en part la plaque support (10) et une plaque de fond (12) fermant les évidements (16) est prévue.

6. Porte-échantillons selon la revendication 5, **caractérisé en ce que** la plaque support (10) et la plaque de fond (12) sont réalisées d'une seule pièce.

7. Porte-échantillons selon la revendication 5 ou 6, **caractérisé en ce que** la plaque support (10) présente, du côté de la plaque de fond (12), des saillies (26, 28) faisant office de cales, sur la surface supérieure desquelles s'applique la plaque de titrage voisine lorsque les plaques de titrage sont empilées les unes sur les autres.

8. Porte-échantillons selon l'une des revendications 1 à 3, **caractérisé en ce que** le porte-échantillons est réalisé en tant que puce (42), dans laquelle les évidements (54) sont de préférence ménagés sous forme de canaux (66a-66c).

9. Porte-échantillons selon l'une des revendications 1 à 8, **caractérisé en ce que** la plaque support (10, 42) présente des évidements d'homogénéisation (34) entre les évidements (16, 54).

10. Porte-échantillons selon l'une des revendications 1 à 9, **caractérisé en ce que** l'âme de support (14) présente une pluralité de plaques, en particulier des plaques métalliques, disposées parallèlement les unes aux autres.

11. Porte-échantillons selon la revendication 10, **caractérisé en ce que** les plaques sont disposées sous forme de structure sandwich dans la plaque support (10, 42).

12. Procédé de fabrication d'un porte-échantillons comportant une âme de support (14) encastrée, selon l'une des revendications 1 à 11, **caractérisé en ce que** l'âme de support (14) est entourée de matière synthétique par injection pour la fabrication de la plaque support (10, 42), de manière que l'âme de support soit complètement entourée de matière synthétique, au moins dans la zone des évidements.

13. Procédé selon la revendication 12, dans lequel l'âme de support (14) est mise en place dans un moule de moulage par injection avant d'être entourée par injection.

14. Procédé selon la revendication 12 ou 13, dans lequel, pour réaliser une plaque de titrage, la plaque de fond est fixée à la plaque support (10) en particulier par collage ou soudage.

15. Procédé selon l'une des revendications 12 à 14, dans lequel les ouvertures (18) sont ménagées dans l'âme de support (14) par découpage par estampage.
